# EUROPÄISCHE PATENTSCHRIFT

(11) **EP 1 548 296 B1**
(45) Veröffentlichungstag und Bekanntmachung des Hinweises auf die Patenterteilung: **07.06.2006**
(21) Anmeldenummer: 04003890.3
(22) Anmeldetag: 20.02.2004
(51) Int. Cl.: F16B 7/22

(54) **Vorrichtung zur koaxialen Verbindung einer ersten Stange mit einer zweiten Stange**
Device for coaxially joining a first rod to a second rod
Dispositif de liaison coaxiale d'une première barre à une deuxième barre

(30) Priorität: 22.12.2003 DE 10361125
(43) Veröffentlichungstag der Anmeldung: 29.06.2005
(73) Patentinhaber: haacon hebetechnik gmbh, 97896 Freudenberg (DE)
(72) Erfinder: Birkholz, Holger, 97906 Faulbach (DE)
(74) Vertreter: Tappe, Hartmut

(56) Entgegenhaltungen:
- FR-E- 91 271
- US-A- 4 500 235

## Beschreibung

Die vorliegende Erfindung betrifft eine Vorrichtung zur koaxialen Verbindung einer ersten Stange mit einer zweiten Stange entsprechend dem oberbegriff des Anspruchs 1 und aus dem Dokument FR-E-91217 bekannt.

Vorrichtungen der eingangs genannten Art, die man auch als Verlängerungsvorrichtungen bezeichnen könnte, kommen stets dann zum Einsatz, wenn eine gegebene Länge einer in ihrer Länge normierten Stange sich als kleiner erweist als die für einen bestimmten Stangeneinsatz benötigte Stangenlänge. Dies gilt sowohl für den statischen Einsatz von Stangen, beispielsweise in Tragwerken, als auch für Fälle, in denen Stangen als Vorschub-, Hub- oder Fördereinrichtungen Verwendung finden. Insbesondere im letzteren Fall werden Stangen häufig als sogenannte Zahnstangen ausgeführt, die entweder aus einem Vollprofil gebildet sein können oder - in der Regel aus Gründen der Gewichtsreduktion - aus einem regelmäßig als Profilrohr ausgebildeten Rohrmaterial, das mit einem Zahnstangenprofilaufsatz versehen ist.

Unabhängig von der jeweiligen Art der Verwendung der Stangen ist es wegen der für den Einsatz von Stangen typischen Knickbelastung erforderlich, die Verbindung zwischen zwei Stangen knicksicher auszuführen. Darüber hinaus erweist es sich insbesondere bei der Verwendung von Stangen als Zahnstangen als erforderlich, dass die Zahnstangenteilung unabhängig von einer Knick- oder Querbeanspruchung der Stangen über den Verbindungsbereich hinweg kontinuierlich erhalten bleibt. Eine Abweichung im Modul im Verbindungsbereich würde geringstenfalls zu einer Unstetigkeit einer längs der Zahnstange ausgeführten Vorschubbewegung führen.

Der vorliegenden Erfindung liegt daher die Aufgabe zugrunde, eine Verbindung zwischen zwei Zahnstangen zu ermöglichen, die sich in besonderem Maße als knicksicher und die Koaxialität der verbundenen Stangen sichernd erweist.

Diese Aufgabe wird durch eine Vorrichtung mit den Merkmalen des Anspruchs 1 gelöst.

Bei der erfindungsgemäßen Vorrichtung zur koaxialen Verbindung einer ersten Stange mit einer zweiten Stange ist die erste Stange in einem Verbindungsbereich mit einem Steckerteil und die zweite Stange in dem Verbindungsbereich mit einem Buchsenteil zur Aufnahme des Steckerteils versehen. Am Steckerteil ist eine erste zur Längsachse der Stangen geneigte, feststehende Keilfläche und am Buchsenteil eine zweite zur Längsachse der Stangen geneigte und quer zur Längsachse bewegbare Keilfläche sowie eine mit der zweiten Keilfläche zusammenwirkende Vorschubeinrichtung vorgesehen, wobei die feststehende Keilfläche auch am Buchsenteil und die bewegbare Keilfläche auch am Steckerteil vorgesehen sei kann. In jedem Fall wirken die Keilflächen derart zusammen, dass eine Bewegung der zweiten Keilfläche gegen die erste Keilfläche mittels der Vorschubeinrichtung eine Vorschubbewegung des Steckerteils in das Buchsenteil bis zur vorgespannten Anlage einer ersten axialen Anschlagfläche der ersten Stange gegen eine zweite axiale Anschlagfläche der zweiten Stange bewirkt.

Die Stecker-Buchsen-Ausbildung der erfindungsgemäßen Verbindungsvorrichtung führt zusammen mit den im Ergebnis unter einer Zugspannung gegeneinander vorgespannten Stangen zu einer besonders knicksicheren Ausführung der Verbindung. Darüber hinaus ermöglicht die Stecker-Buchsen-Ausführung auf einfache Art und Weise die Sicherung der koaxialen Ausrichtung der miteinander verbundenen Stangen. Entsprechend sorgt die Stecker-Buchsen-Ausführung im Zusammenhang mit der gegeneinander vorgespannten Anordnung der Stangen auch für eine besondere Formhaltigkeit des Stangenverbunds über den Verbindungsbereich hinweg, so dass auch bei einer auftretenden Querbelastung die Orientierung der Stangenoberflächen erhalten bleibt und somit insbesondere keine Unstetigkeit in der Flächenneigung auftritt.

Die Keilfläche ist erfindungsgemäβ am Steckerteil der ersten Stange an einer Zugöse ausgebildet, die an einer freien Stirnfläche des Steckerteils angeordnet ist, und die Keilfläche am Buchsenteil ist an einer zum Eingriff in die Zugöse bestimmten und mittels der Vorschubeinrichtung radial bewegbaren Hakeneinrichtung ausgebildet. Durch die Ausbildung einer Keilfläche an der Zugöse und der weiteren Keilfläche an einer mit der Zugöse zusammenwirkenden Hakeneinrichtung ist für einen besonders sicheren Eingriff gesorgt, der eine verliersichere Verbindung zwischen der ersten und der zweiten Stange bereits bei einem noch relativ losen Eingriff der Hakeneinrichtung in die Zugöse ermöglicht, ohne dass die zur Gewährleistung der sicheren Verbindung bei einer Querkraftbelastung notwendige axiale Vorspannung gegeben sein muss. Zum anderen ermöglicht die Ausbildung der Keilfläche an einer stirnflächig am Steckerteil angeordneten Zugöse auf einfache Art und Weise die exakt axiale Ausrichtung der Zugspannung auf der Längsachse der Stangen.

Wenn darüber hinaus die Keilfläche an der auf der Längsachse angeordneten Zugöse als satteldachförmige Doppelkeilfläche ausgebildet ist und die Hakeneinrichtung zwei mit jeweils einer Keilfläche versehene Haken aufweist, die auf einer gemeinsamen Zustellachse diametral zustellbar und in Eingriff mit der Zugöse bringbar sind, kann die zur Sicherung der axialen Verbindung notwendige axiale Vorspannkraft auf mehrere Haken verteilt werden, so dass sich die Verbindung durch eine hohe Zuverlässigkeit im Betrieb auszeichnet.

Besonders vorteilhaft ist es, wenn die Haken der Hakeneinrichtung auf einer gemeinsamen Spindel angeordnet sind, die mit ihren Spindelenden eine Außenwandung des Buchsenteils durchdringt und mit jeweils einem Haken zugeordneten Spindelabschnitten mit gegenläufiger Gewindeorientierung versehen ist. Durch die Anordnung auf einer Spindel bzw. die Zustellung der Haken mittels der Spindel wird sichergestellt, dass die Zustellung der Haken synchron erfolgen kann, so dass eine entsprechend gleichmäßige Krafteinleitung über die Haken und die Zugöse vom Buchsenteil in das Steckerteil erfolgt. Selbst bei rauhen Einsatzbedingungen, die zu lokal sehr unterschiedlichen Reibungskoeffizienten zwischen dem Steckerteil und dem Buchsenteil führen können, wird somit erreicht, dass ein gleichförmiges Eindringen des Steckerteils in das Buchsenteil ohne die Gefahr eines Verkantens erfolgt. Darüber hinaus ermöglicht die die Außenwandung des Buchsenteils durchdringende Anordnung der Spindelenden einen leichten Zugriff von außerhalb auf die Spindel zur Ausführung der Zustellbewegung. Aufgrund der gegenläufigen Gewindeorientierung der Spindelabschnitte kann dieser Zugriff sowohl auf das eine als auch auf das andere Spindelende erfolgen, um die Zustellung auszuführen und die knicksichere Verbindung zwischen den Stangen herzustellen.

Vorzugsweise sind die Spindelenden in der Außenwandung des Buchsenteils versenkt oder flächenbündig angeordnet, so dass die Außenwandung keine möglichen Überfahrhindernisse aufweist, die insbesondere einen Abrollvorgang auf der Außenwandung, etwa eines Getriebes, behindern könnten.

Wenn darüber hinaus die Spindelenden stirnseitig mit einem als Innenvierkant ausgebildeten Werkzeugsitz versehen sind, kann die Betätigung der Zustellung, also die Herstellung der Verbindung zwischen den beiden Stangen, mittels einfachster Werkzeuge, wie beispielsweise einer Einsteckkurbel, erfolgen.

Insbesondere bei einem Einsatz der Verbindungsvorrichtung zur Verbindung von Zahnstangenteilen erweist es sich als vorteilhaft, wenn das Steckerteil und das Buchsenteil mit einer Eingriffspaarung zur radialen Relativpositionierung versehen sind, damit auf einfache Art und Weise sichergestellt werden kann, dass die Verzahnung der einen Stange exakt fluchtend mit der Verzahnung der anderen Stange ausgerichtet ist.

Wie aus den vorstehenden Ausführungen betreffend bevorzugte Ausführungsformen der erfindungsgemäßen Verbindungsvorrichtung bereits deutlich wird, lässt sich die Verbindungsvorrichtung besonders vorteilhaft einsetzen, wenn das Steckerteil und das Buchsenteil jeweils an einer als Zahnstange ausgebildeten Stange angeordnet sind.

Dabei hat es sich als besonders vorteilhafte Ausführungsform herausgestellt, wenn das Buchsenteil an einer Basiszahnstange und das Steckerteil an einer Zahnstangenverlängerung ausgebildet ist, da das an der Zahnstangenverlängerung ausgebildete Steckerteil im Falle einer nicht benötigten Zahnstangenverlängerung dazu genutzt werden kann, die Zahnstangenverlängerung mittels des Steckerteils in einer verwahrenden buchsenförmigen Aufnahme unabhängig von der Basiszahnstange aufzubewahren.

Nachfolgend wird eine bevorzugte Ausführungsform der Verbindungsvorrichtung anhand der Zeichnung näher erläutert.

Es zeigen:
- **Fig. 1**: eine Mehrzahl von in Eckbereichen eines Containers angeordneten Zahnstangenhubvorrichtungen mit verlängerbaren Zahnstangen;
- **Fig. 2**: eine Teilschnittdarstellung eines Verbindungsbereichs eines Buchsenteils einer Basiszahnstange gemäß Schnittlinienverlauf II-II in **Fig. 1** mit Darstellung einer Hakeneinrichtung;
- **Fig. 3**: die in **Fig. 2** darstellte Hakeneinrichtung in einer Schnittdarstellung gemäß Schnittlinienverlauf III-III;
- **Fig. 4**: einen Verbindungsbereich eines Steckerteils einer Zahnstangenverlängerung gemäß Schnittlinienverlauf II-II in **Fig. 1**;
- **Fig. 5**: eine Seitenansicht des in **Fig. 4** dargestellten Steckerteils gemäß Ansicht V;
- **Fig. 6**: eine Darstellung des in das Buchsenteil der Basiszahnstange eingreifenden Steckerteils der Zahnstangenverlängerung.

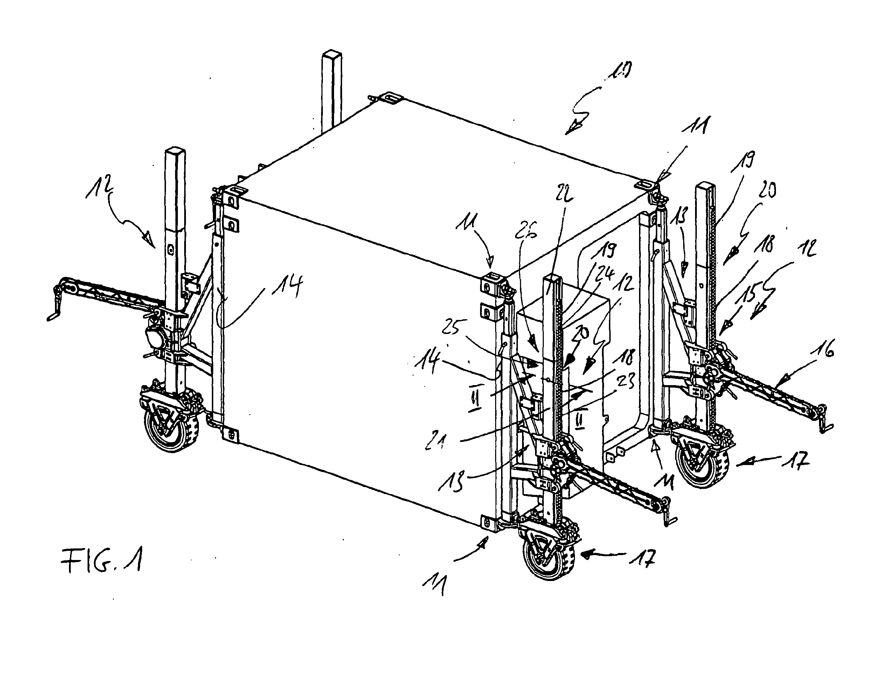

**Fig. 1** zeigt einen im vorliegenden Fall als Kabine ausgebildeten Container 10, der in seinen Ecken mit Eckbefestigungen 11 versehen ist, die zum Anschluss von Container-Hub- und Transporteinrichtungen 12 dienen. Die Container-Hub- und Transporteinrichtungen 12 sind über eine Tragauslegereinrichtung 13 mit jeweils zwei Eckbefestigungen 11 an einer Hochkante 14 des Containers 10 verbunden. Die Tragauslegereinrichtungen 13 sind jeweils an eine Zahnstangenhubeinrichtung 15 angeschlossen, die über einen Kurbeltrieb 16 betätigt eine Hubbewegung des Containers 10 ermöglicht. Um ein Verfahren des Containers 10 zu ermöglichen, sind die Zahnstangenhubeinrichtungen 15 an ihrem unteren Ende mit einer anbaubaren Radeinrichtung 17 versehen.

Wie aus **Fig. 1** ferner zu ersehen ist, weisen die Zahnstangenhubeinrichtungen 15 jeweils eine aus einer Basiszahnstange 18 und einer Zahnstangenverlängerung 19 zusammengesetzte Hubzahnstange 20 auf. Die Basiszahnstange 18 und die Zahnstangenverlängerung 19 weisen im vorliegenden Fall jeweils einen Corpus 21 bzw. 22 aus einem Vierkantrohr auf, die jeweils an einer dem Kurbeltrieb 16 zugewandten Außenwandung mit einem Zahnstangenprofil 23 bzw. 24 bestückt sind. In einem gemeinsamen Verbindungsbereich 25 sind die Basiszahnstange 18 und die Zahnstangenverlängerung 19 mittels einer Verbindungsvorrichtung 26 so miteinander verbunden, dass die Zahnstangenprofile 23, 24 unter Aufrechterhaltung eines übereinstimmenden Zahnstangenmoduls m fluchtend miteinander angeordnet sind.

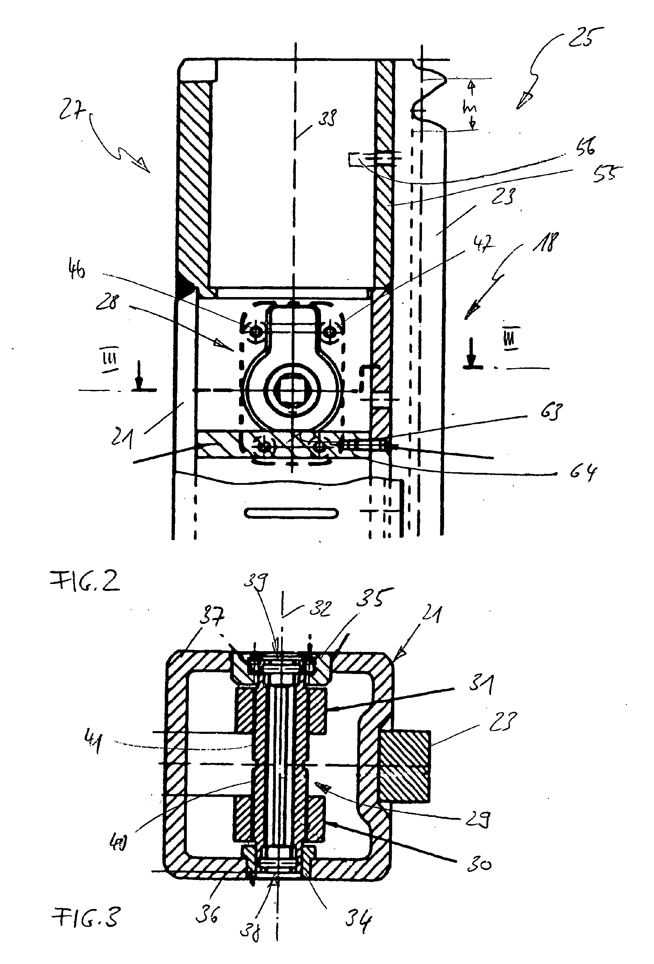

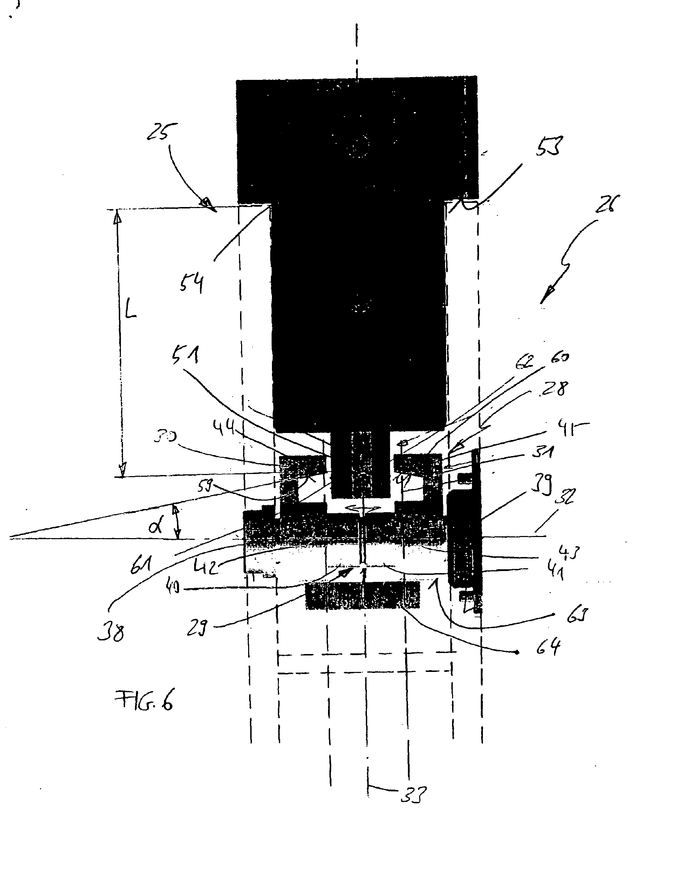

**Fig. 2** zeigt ein im Verbindungsbereich 25 an der Basiszahnstange 18 ausgebildetes Buchsenteil 27, das im vorliegenden Fall als Anschweißbuchse ausgebildet mit dem Corpus 21 der Zahnstangenbasis 18 verbunden ist. Am Buchsenteil 27 bzw. im vorliegenden Ausführungsbeispiel unterhalb des Buchsenteils 27 befindet sich eine Hakeneinrichtung 28, die, wie aus einer Zusammenschau der **Fig. 3** und **6** zu ersehen ist, zwei auf einer Spindel 29 angeordnete Haken 30, 31 aufweist. Die Spindel 29 definiert eine Zustellachse 32, die eine Längsachse 33 des Buchsenteils 27 bzw. der Basiszahnstange 18 schneidet.

Wie **Fig. 3** zeigt, ist die Spindel 29 an ihren Enden in Gleitlagern 34, 35 gelagert, die in einander gegenüberliegenden Wandungen 36, 37 des Corpus 21 eingesetzt sind. Weiterhin sind die Enden der Spindel 29 im Wesentlichen bündig in der Außenfläche der Wandungen 36, 37 angeordnet und jeweils als Innenvierkant 38, 39 ausgebildet.

Wie aus den **Fig. 3** und **6** zu ersehen ist, weist die Spindel 29 zwei jeweils einem Haken 30 bzw. 31 zugeordnete Spindelabschnitte 40, 41 auf, die eine gegenläufige Gewindeorientierung aufweisen, derart, dass im vorliegenden Fall der dem Haken 30 zugeordnete Gewindeabschnitt 40 als Rechtsgewinde ausgebildet ist und der dem Haken 31 zugeordnete Gewindeabschnitt 41 als Linksgewinde ausgebildet ist.

Wie ferner insbesondere aus **Fig. 6** hervorgeht, weisen die Haken 30, 31 jeweils eine mit dem zugeordneten Gewindeabschnitt 40 bzw. 41 im Eingriff befindliche Gewindemuffe 42, 43 auf, die an ihrem Umfang dem Verbindungsbereich 25 zugewandt jeweils einen Hakenfortsatz 44 bzw. 45 aufweisen. An den Hakenfortsätzen 44, 45 ist jeweils unterseitig eine Keilfläche 59 bzw. 60 ausgebildet, die zur Zustellachse 32 der Hakeneinrichtung 28 um den Winkel α angestellt sind.

Wie aus **Fig. 2** zu ersehen ist, sind die Hakenfortsätze 44 bzw. 45 seitlich durch Stifte 46, 47 geführt, derart, dass bei einer Drehung eines in den Innenvierkant 38 der Spindel 29 eingesetzten, hier nicht näher dargestellten Vierkants eines Werkzeuges im Gegenuhrzeigersinn eine Zustellung der Haken 30, 31 in Richtung auf die Längsachse 33 bei gleichbleibender Ausrichtung der Hakenfortsätze 44, 45 erfolgt. Alternativ kann eine Führung der Hakenfortsätze 44, 45 auch durch ein Gleiten von an den Haken 30, 31 ausgebildeten Hakenführungsflächen 63 auf einer unterhalb der Haken 30, 31 angeordneten Anschlagplatte 64 erfolgen.

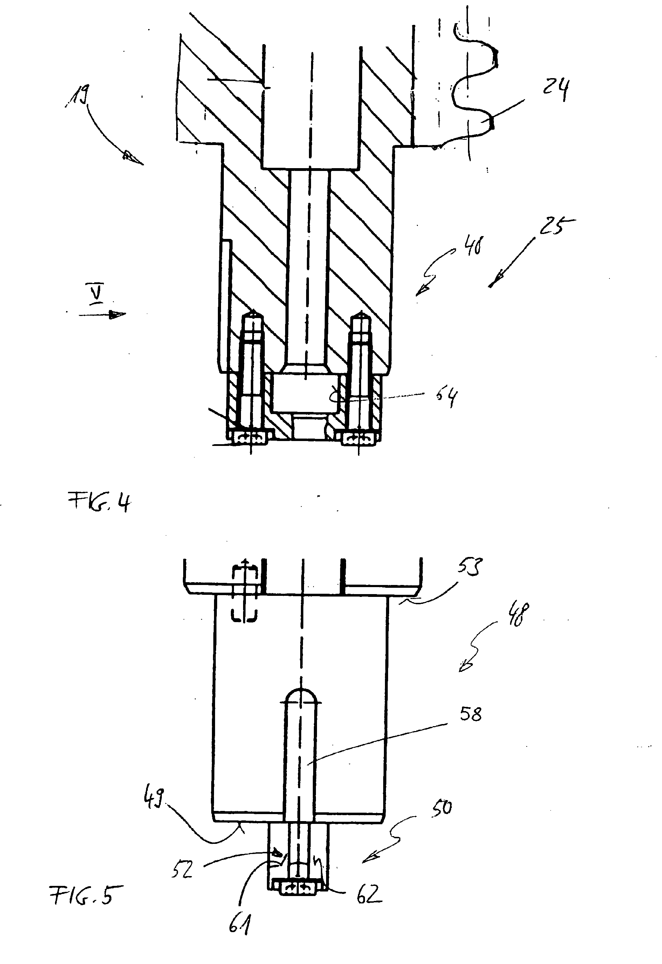

In den **Fig. 4** und **5** ist ein im Verbindungsbereich 25 an der Zahnstangenverlängerung 19 ausgebildetes Steckerteil 48 dargestellt, das im vorliegenden Fall aus einem einstückig am Corpus 22 der Zahnstangenverlängerung 19 ausgebildeten Einsteckzapfen gebildet ist. An seiner freien Stirnfläche ist das Steckerteil 48 mit einer hier U-förmig ausgebildeten Zugöse 50 versehen, die mit der Stirnfläche 49 verschraubt ist. Die Zugöse 50 ist so auf der Stirnfläche 49 ausgerichtet, dass eine Firstkante 51 einer satteldachförmig ausgebildeten Doppelkeilfläche 52 die Längsachse 33 des Steckerteils 48 bzw. der Zahnstangenverlängerung 19 schneidet und die Zugöse, wie in **Fig. 4** dargestellt, symmetrisch zur Längsachse 33 angeordnet ist.

**Fig. 6** zeigt die mit dem Steckerteil 48 in den Buchsenteil 27 der Basiszahnstange 18 eingesetzte Zahnstangenverlängerung 19. Bei der in **Fig. 6** dargestellten Konfiguration ist die Zugöse 50 des Steckerteils 48 zwischen den auseinander bewegten Haken 30, 31 der am Buchsenteil 27 angeordneten Hakeneinrichtung 28 angeordnet. Dabei liegt eine an der Zahnstangenverlängerung 19 benachbart dem Steckerteil 48 ausgebildete Anschlagfläche 53 auf einer durch die Stirnfläche des Buchsenteils 27 gebildeten Anschlagfläche 54 auf und definiert somit eine axiale Eingriffslänge L, die dem axialen Abstand der Firstkante 51 der Doppelkeilfläche 52 von der Anschlagfläche 54 entspricht. Wie ferner aus einer Zusammenschau der **Fig. 2** und **5** in Verbindung mit **Fig. 6** hervorgeht, ist zur Definition der in **Fig. 6** dargestellten radialen Relativpositionierung zwischen der Zugöse 50 und den Haken 30, 31 der Hakeneinrichtung 28 in einer Buchsenwandung 55 des Buchsenteils 27 (**Fig. 2**) ein Zylinderstift 56 vorgesehen, der in eine axial in einer Umfangsfläche 57 des Steckerteils ausgebildete Führungsnut 58 eingreift und während des Einsetzens des Steckerteils 48 in das Buchsenteil 27 eine radiale Relativpositionierung aufrechterhält, wie sie in **Fig. 6** dargestellt ist.

Um ausgehend von der in **Fig. 6** dargestellten Einsteckkonfiguration der Verbindungsvorrichtung 26 in eine Kraftschlusskonfiguration, die eine kraftschlüssige Verbindung zwischen der Basiszahnstange 18 und der Zahnstangenverlängerung 19 definiert, überzuwechseln, wird in den in **Fig. 6** rechts dargestellten Innenvierkant 39 der Spindel 29 ein Vierkant eines beispielsweise als Einsteckkurbel ausgebildeten Werkzeugs eingesetzt und die Spindel 29 im Uhrzeigersinn gedreht. Dabei werden die Haken 30, 31 mit ihren Hakenfortsätzen 44, 45 gleichförmig in einen Eingriff mit der Zugöse 50 bewegt. Sobald sich ein Kontakt zwischen den Keilflächen 59, 60 der Haken 30, 31 und den jeweils zugeordneten Keilflächen 61, 62 der Zugöse 50 bei fortschreitender Zustellbewegung der Haken 30, 31 in Richtung auf die Längsachse 33 einstellt, wird eine zunehmende Zugkraft auf die Zugöse 50 ausgeübt, die eine entsprechend zunehmende Druck-Vorspannung zwischen den aufeinander aufliegenden Anschlagflächen 53, 54 der Basiszahnstange 18 und der Zahnstangenverlängerung 19 bewirkt.

Zum Verschluss des Buchsenteils 27 der Basiszahnstange 18 bei nicht in den Buchsenteil 27 eingesetzter Zahnstangenverlängerung 19 kann eine entsprechend dem Steckerteil 48 ausgebildete, hier nicht näher dargestellte Einsteckkappe vorgesehen werden, die in gleicher Weise wie das Steckerteil 48 über die Hakeneinrichtung 28 mit der Basiszahnstange 18 verriegelt wird und ein Eindringen von Schmutz in den Buchsenteil 27 verhindert. Ein radialer Überstand der Einsteckkappe kann dabei gleichzeitig als Hubbegrenzung dienen, die im Hubbetrieb verhindert, dass das Hubgetriebe über das freie Ende der Basiszahnstange 18 hinausfährt.

## Patentansprüche

1. Vorrichtung zur koaxialen Verbindung einer ersten Stange (19) mit einer zweiten Stange (18), wobei die erste Stange in einem Verbindungsbereich (25) mit einem Steckerteil (48) und die zweite Stange im Verbindungsbereich mit einem Buchsenteil (27) zur Aufnahme des Steckerteils versehen ist und am Steckerteil oder am Buchsenteil eine erste zur Längsachse (33) der Stangen geneigte, feststehende Keilfläche (61, 62) und am Buchsenteil oder am Steckerteil eine zweite zur Längsachse der Stangen geneigte und quer zur Längsachse bewegbare Keilfläche (59, 60) sowie eine mit der zweiten Keilfläche zusammenwirkende Vorschubeinrichtung (29) vorgesehen ist, derart, dass eine Bewegung der zweiten Keilfläche gegen die erste Keilfläche mittels der Vorschubeinrichtung eine Vorschubbewegung des Steckerteils in das Buchsenteil bis zur vorgespannten Anlage einer ersten axialen Anschlagfläche (53) der ersten Stange gegen eine zweite axiale Anschlagfläche (54) der zweiten Stange bewirkt,
**dadurch gekennzeichnet,**
**dass** die Keilfläche (61, 62) am Steckerteil (48) der ersten Stange (19) an einer Zugöse (50) ausgebildet ist, die an einer freien Stirnfläche (49) des Steckerteils angeordnet ist, und die Keilfläche (59, 60) am Buchsenteil (27) an einer zum Eingriff in die Zugöse bestimmten und mittels der Vorschubeinrichtung (29) radial bewegbaren Hakeneinrichtung (28) ausgebildet ist.

2. Vorrichtung nach Anspruch 1,
**dadurch gekennzeichnet**
**dass** die Keilfläche (61, 62) an der auf der Längsachse (33) angeordneten Zugöse (50) als satteldachförmige Doppelkeilfläche ausgebildet ist und die Hakeneinrichtung (28) zwei mit jeweils einer Keilfläche (59, 60) versehene Haken (30, 31) aufweist, die auf einer gemeinsamen Zustellachse (32) diametral zustellbar und in Eingriff mit der Zugöse bewegbar sind.

3. Vorrichtung nach Anspruch 2,
**dadurch gekennzeichnet,**
**dass** die Haken (30, 31) der Hakeneinrichtung (28) auf einer gemeinsamen Spindel (29) angeordnet sind, die mit ihren Spindelenden eine Außenwandung des Buchsenteils (27) durchdringt und mit jeweils einem Haken zugeordneten Spindelabschnitten (40, 41) mit gegenläufiger Gewindeorientierung versehen ist.

4. Vorrichtung nach Anspruch 3,
**dadurch gekennzeichnet,**
**dass** die Spindelenden stirnseitig mit einem als Innenvierkant (38, 39) ausgebildeten Werkzeugsitz versehen sind.

5. Vorrichtung nach einem der vorangehenden Ansprüche,
**dadurch gekennzeichnet,**
**dass** das Steckerteil (48) und das Buchsenteil (27) mit einer Eingriffspaarung (56, 58) zur radialen Relativpositionierung versehen sind.

6. Vorrichtung nach einem der vorangehenden Ansprüche,
**dadurch gekennzeichnet,**
**dass** das Steckerteil (48) und das Buchsenteil (27) jeweils an einer als Zahnstange (18, 19) ausgebildeten Stange angeordnet sind.

7. Vorrichtung nach Anspruch 6,
**dadurch gekennzeichnet,**
**dass** das Buchsenteil (27) an einer Zahnstangenbasis (18) und das Steckerteil an einer Zahnstangenverlängerung (19) ausgebildet ist.

## Claims

1. Device for coaxially joining a first rod (19) to a second rod (18), the first rod being provided in a joining area (25) with a plug-in component (48) and the second rod being provided in the joining area with a bush component (27) for receiving the plug-in component and a first fixed wedge face (61, 62) inclined toward the longitudinal axis (33) of the rods being provided on the plug-in component or on the bush component and a second wedge face (59, 60), inclined toward the longitudinal axis of the rods and movable transversely to the longitudinal axis, being provided on the bush component or on the plug-in component, in addition to a thrust unit (29) co-operating with the second wedge face, such that a movement of the second wedge face counter to the first wedge face by means of the thrust unit produces a thrust movement of the plug-in component into the bush component until a first axial stop face (53) of the first rod is in pretensioned contact with a second axial stop face (54) of the second rod,
**characterised in that**
the wedge face (61, 62) is configured on the plug-in component (48) of the first rod (19) on a lug (50) which is arranged on a free front face (49) of the plug-in component and the wedge face (59, 60) on the bush component (27) is configured on a hook device (28) designed to engage in the lug and radially movable by means of the thrust unit (29).

2. Device according to claim 1,
**characterised in that**
the wedge face (61, 62) on the lug (50) arranged on the longitudinal axis (33) is configured as a gable roof-shaped double wedge face and the hook device (28) comprises two hooks (30, 31) provided with one respective wedge face (59, 60) which may be fed in diametrically on a common feed axis (32) and may be moved in engagement with the lug.

3. Device according to claim 2,
**characterised in that**
the hooks (30, 31) of the hook device (28) are arranged on a common spindle (29) which penetrates an outer wall of the bush component (27) with its spindle ends and is provided with spindle portions (40, 41) with a counter-rotating thread orientation and associated with one respective hook.

4. Device according to claim 3,
**characterised in that**
the spindle ends are provided on the front face with a tool seat configured as a square socket (38, 39).

5. Device according to any one of the preceding claims,
**characterised in that**
the plug-in component (48) and the bush component (27) are provided with an engagement pairing (56, 58) for relative radial positioning.

6. Device according to any one of the preceding claims,
**characterised in that**
the plug-in component (48) and the bush component (27) are arranged respectively on a rod configured as a toothed rack (18, 19).

7. Device according to claim 6,
**characterised in that**
the bush component (27) is configured on a toothed rack base (18) and the plug-in component on a toothed rack extension (19).

## Revendications

1. Dispositif pour la connexion coaxiale d'une première barre (19) à une deuxième barre (18), la première barre étant munie d'une pièce à fiche (48) dans une zone de connexion (25), et la deuxième barre d'une pièce à prise (27) dans la zone de connexion pour le logement de la pièce à fiche, une première surface en coin (61, 62) fixe inclinée vers l'axe longitudinal (33) des barres étant prévue sur la pièce à fiche ou la pièce à prise, et une deuxième surface en coin (59, 60) inclinée vers l'axe longitudinal des barres et déplaçable perpendiculairement à l'axe longitudinal sur la pièce à fiche ou la pièce à prise, ainsi qu'un dispositif d'avance (29) coopérant avec la deuxième surface en coin de manière qu'un déplacement de la deuxième surface en coin vers la première surface en coin au moyen du dispositif d'avance provoque un mouvement d'avance de la pièce à fiche dans la pièce à prise jusqu'à l'application, avec précontrainte, d'une première surface de butée axiale (53) de la première barre contre une deuxième surface de butée axiale (54) de la deuxième barre,
**caractérisé en ce que**
la surface en coin (61, 62) sur la pièce à fiche (48) de la première barre (19) est formée sur un anneau de traction (50) disposé sur une surface frontale libre (49) de la pièce à fiche, et **en ce que** la surface en coin (59, 60) sur la pièce à prise (27) est formée sur un dispositif à crochets (28) prévu pour s'engager dans l'anneau de traction et radialement déplaçable au moyen du dispositif d'avance (29).

2. Dispositif selon la revendication 1,
**caractérisé en ce que**
la surface en coin (61, 62) sur l'anneau de traction (50) disposé sur l'axe longitudinal (33) est réalisée sous forme de surface de double coins en forme de toit à deux pentes, et **en ce que** le dispositif à crochets (28) comporte deux crochets (30, 31) pourvus chacun d'une surface en coin (59, 60), lesquels peuvent être réglés diamétralement sur un axe d'avance commun (32) et être déplacés engagés dans l'anneau de traction.

3. Dispositif selon la revendication 2,
**caractérisé en ce que**
les crochets (30, 31) du dispositif à crochets (28) sont disposés sur un arbre commun (29) dont les extrémités traversent une paroi extérieure de la pièce à prise (27) et présentant des parties d'arbre (40, 41) affectées chacune à un crochet et avec des orientations inverses de filets.

4. Dispositif selon la revendication 3,
**caractérisé en ce que**
les extrémités d'arbres sont frontalement munies d'un siège d'outil réalisé sous la forme d'un carré conducteur femelle (38, 39).

5. Dispositif selon l'une des revendications précédentes,
**caractérisé en ce que**
la pièce à fiche (48) et la pièce à prise (27) sont munies d'une paire d'engrènements (56, 58) pour leur positionnement radial relatif.

6. Dispositif selon l'une des revendications précédentes,
**caractérisé en ce que**
la pièce à fiche (48) et la pièce à prise (27) sont respectivement disposées sur une barre réalisée sous forme d'une crémaillère (18, 19).

7. Dispositif selon la revendication 6,
**caractérisé en ce que**
la pièce à prise (27) est réalisée sur une base de la crémaillère (18), et la pièce à fiche sur une rallonge de la crémaillère (19).
